Europäisches Patentamt

European Patent Office

Office européen des brevets

(11) Numéro de publication : **0 354 843 B1**

# (12) FASCICULE DE BREVET EUROPEEN

(45) Date de publication du fascicule du brevet :
04.11.92 Bulletin 92/45

(51) Int. Cl.⁵ : **C01G 49/00**

(21) Numéro de dépôt : **89402241.7**

(22) Date de dépôt : **08.08.89**

(54) **Procédé de préparation de ferrates alcalins ou alcalinoterreux par voie solide.**

(30) Priorité : **09.08.88 FR 8810750**

(43) Date de publication de la demande :
**14.02.90 Bulletin 90/07**

(45) Mention de la délivrance du brevet :
**04.11.92 Bulletin 92/45**

(84) Etats contractants désignés :
**BE DE ES GB IT NL**

(56) Documents cités :
**EP-A- 0 155 837**
**US-A- 2 758 090**
**PATENT ABSTRACTS OF JAPAN, vol. 4,**
**no.119 (C-22)[601], 23 août 1980, page 131 C**
**22; & JP-A-55 75 926 (NIPPON KAGAKU**
**KOGYOK.K.) 07-06-1980**
**PATENT ABSTRACTS OF JAPAN, vol. 4, no.**
**119 (C-22)[601], 23 août 1980, page 131 C 22; &**
**JP-A-55 75 925 (NIPPON KAGAKUKOGYO**
**K.K.) 07-06-1980**

(73) Titulaire : **SOCADOUR**
**Route de la Digue**
**F-40220 Tarnos (FR)**

(72) Inventeur : **Schmitt, Nathalie**
**Fraispertuis**
**F-88700 Rambervillers (FR)**
Inventeur : **Evrard, Omer**
**13 Avenue du Vieux Château**
**F-54500 Vandoeuvre (FR)**
Inventeur : **Brice, Jean-François**
**1 Allée de Venise**
**F-54500 Vandoeuvre (FR)**
Inventeur : **Gérardin, René**
**9 rue des Cottages**
**F-54600 Villers les Nancy (FR)**

(74) Mandataire : **CABINET BONNET-THIRION**
**95 Boulevard Beaumarchais**
**F-75003 Paris (FR)**

## Description

L'invention se rapporte à un procédé de préparation de ferrates de métaux alcalins ou alcalino-terreux par réaction d'un hypochlorite sur un composé de fer au plus trivalent en présence d'hydroxydes alcalins ou alcalino-terreux.

Les ferrates alcalins et alcalino-terreux, $FeO_4Na_2$, $FeO_4K_2$, $FeO_4Ca$, $FeO_4Ba$, sont des oxydants puissants, utilisables notamment pour le blanchiment de textile, le traitement des eaux usées, dans des processus de chimie organique ou minérale.

On a proposé (comme le mentionne JP-A-75926/80) de préparer du ferrate de potassium en attaquant du fer ou de l'oxyde ferrique par un mélange fondu de potasse et nitrate de potassium.

On a également proposé (US-A-4 435 256, US-A-4 435 257) de préparer des ferrates, singulièrement du ferrate de sodium, par oxydation électrolytique dans une cellule à membrane, la chambre anodique contenant une solution aqueuse d'hydroxyde de sodium avec un stabilisant du ferrate, et des ions Fe (III), tandis que la chambre cathodique contient une solution aqueuse d'hydroxyde de sodium.

On a encore proposé (EP-A-0 082 590) de préparer du ferrate de potassium par réaction, en solution aqueuse à au moins 30 % en poids de potasse très pure, de chlore sur un sel ferrique en présence de silicate de potassium, pour obtenir un précipité d'un mélange de ferrate de potassium, chlorure de potassium et hydroxyde ferrique. Le ferrate est extrait du mélange par dissolution dans une solution de potasse diluée à 5-25 % en poids, après quoi le ferrate est précipité par concentration de la solution de potasse à température comprise entre - 20° et + 20°C.

Les inconvénients des méthodes précédentes résident dans le fait que les opérations de séparation du ferrate d'avec l'hydroxyde alcalin sont relativement longues, et s'opèrent dans des conditions qui favorisent une décomposition du ferrate, malgré la présence de stabilisants. En outre la concentration des solutions de ferrate dans les alcalis est relativement coûteuse.

L'invention a pour objectif un procédé de préparation de ferrates alcalins ou alcalino-terreux qui élimine la nécessité de faire précipiter le ferrate par concentration de la solution d'alcali, et les pertes de rendement qu'entraîne la décomposition de ferrate au cours des opérations de récupération.

A cet effet, l'invention propose un procédé de préparation de ferrates de métaux alcalins ou alcalino-terreux par réaction d'un hypochlorite sur un composé de fer au plus trivalent en présence d'hydroxydes alcalins ou alcalino-terreux, caractérisé en ce que l'on effectue un mélange d'un sel de fer (II) ou (III) et d'un hypochlorite de métal alcalin ou alcalino-terreux, en poudre passant à une première maille, on forme une première couche de ce mélange en poudre dans un réceptacle plat couplé à un générateur de vibration mécanique, on dépose sur cette première couche une seconde couche formée de granules d'hydroxyde de métal alcalin ou alcalino-terreux contenant entre 10 et 30 % en poids d'eau, les granules étant refusées à une seconde maille nettement plus grande que la première, on soumet le réceptacle à une vibration pendant 10 à 60 minutes à moins de 40°C, en sorte que du ferrate se forme au contact des granules, on élimine les résidus en poudre par tamisage à une maille intermédiaire entre les première et seconde mailles, et on élimine l'excès d'hydroxyde par lavage avec un solvant organique sensiblement anhydre.

Ainsi le ferrate se forme au contact des granules d'hydroxyde, tandis que la phase pulvérulente est éliminée. Par ailleurs, le ferrate est séparé de l'hydroxyde par dissolution de celui-ci dans le solvant organique, dans des conditions telles que le ferrate ne subit pratiquement pas de décomposition.

Accessoirement la récupération de l'hydroxyde à partir de la solution de lavage est économique au regard d'une récupération d'hydroxyde à partir d'une solution aqueuse, l'énergie latente de vaporisation des solvants organiques étant nettement inférieure à celle de l'eau, et il en est de même de l'énergie latente de cristallisation de l'hydroxyde.

Les caractéristiques secondaires et les avantages de l'invention ressortiront d'ailleurs de la description qui va suivre, illustrée d'exemple.

Exemple : Préparation de ferrate de potassium

On broie ensemble intimement 100 parties pondérales de sulfate ferreux heptahydraté et 68 parties d'hypochlorite de calcium de qualité commerciale de degré chlorométrique 210, de manière que la masse totale du broyat passe à la maille de 500 μm.

On étale le broyat en couche, sur laquelle on disperse 100 parties de pastilles de potasse commerciale à 15 % d'eau ; le tout est mis sur un vibreur pour assurer que le contact poudre/pastilles se renouvelle pendant une durée de 10 à 60 minutes, selon l'humidité de l'atmosphère. On veille à ce que la température des couches réagissantes ne dépasse pas 40°C.

La réaction s'effectue selon la formule suivante :
$$FeSO_4, 7H_2O + Ca(OCl)_2 + 6KOH = K_2FeO_4 + 2KCl + K_2SO_4 + Ca(OH)_2 + 9H_2O.$$

On notera que, sur les 9 moles d'eau, 7 proviennent du sulfate ferreux, et 2 se forment dans la réduction de l'hypochlorite.

On tamise la masse réactive à la maille de 1 mm pour éliminer la poudre (sulfate ferreux, hypochlorite) qui n'a pas réagi. Puis on étuve les pastilles à une température de 105-140°C pendant une durée de 8 à 18 heures, à poids sensiblement constant ; en présence d'eau, le ferrate est peu stable, et a tendance à se décomposer en donnant de l'hydroxyde ferrique hydraté. Dans la pratique, on étuvera à 120°C pendant 12 heures.

Puis on dissout la potasse en excès par un lavage avec un alcool inférieur, alcool méthylique ou éthylique, avec le moins d'eau possible. L'alcool éthylique est de l'alcool à 96 %.

Le produit résiduel, de couleur pourpre, est stable en enceinte fermée. On peut vérifier par spectroscopie Mössbauer que le fer est sensiblement exclusivement au degré d'oxydation VI (singulet de déplacement isomérique égal à - 0,88 mm/s par rapport au fer métallique).

Le ferrate obtenu contient des sels et hydroxydes de potassium et calcium. On peut le purifier par lavage avec des solvants appropriés. Notamment le méthanol dissout, avec la potasse, du chlorure de potassium et de calcium, et du carbonate de potassium (issu de la carbonatation à l'air de la potasse caustique).

On a vérifié que les hypochlorites de calcium, baryum, sodium et potassium convenaient comme oxydant, et que les hydroxydes de sodium, potassium, calcium et baryum convenaient également, à l'état granulaire, comme base solide réactive. Autrement dit, le choix des métaux alcalins ou alcalino-terreux pour l'oxydant et la base forte est surtout une question d'opportunité, suivant l'utilisation prévue des ferrates et le prix des réactifs.

Des essais ont permis d'établir un certain nombre de règles pratiques relatives au choix du sel de fer et des conditions opératoires.

Ainsi on a précisé que le démarrage de la réaction exigeait la présence d'eau mais en quantité limitée car la réaction s'accélère lorsque la quantité d'eau présente augmente, et de l'eau se forme au cours de la réaction, et par la suite, l'eau peut induire une décomposition du ferrate avec formation d'hydroxyde. La quantité d'eau présente au départ dans l'hydroxyde alcalin ou alcalino-terreux ne doit pas être inférieure à 10 %, ni supérieure à 30 % en poids. Il y a lieu de prendre en compte également l'eau de cristallisation du sel de fer.

Le sel de fer utilisé peut être un sel ferreux ou un sel ferrique. Dans la synthèse du ferrate en milieu aqueux on évite les sels ferreux, qui sont plus réducteurs que les sels ferriques ; par contraste, suivant l'invention, on préférera les sels ferreux, les sels ferriques en milieu alcalin ayant tendance à former de l'hydroxyde ferrique qui catalyse la décomposition du ferrate, et est difficile à éliminer.

Par ailleurs l'anion est important. Des anions oxydants, comme du nitrate ferrique, conduisent à des réactions difficilement contrôlables. Des anions réducteurs, susceptibles de venir en compétition avec le fer dans la réaction avec l'hypochlorite, sont bien entendu à éviter. Enfin le sel de fer doit présenter une solubilité dans les bases non négligeable.

## Revendications

1. Procédé de préparation de ferrates de métaux alcalins ou alcalino-terreux par réaction d'un hypochlorite sur un composé de fer au plus trivalent en présence d'hydroxydes alcalins ou alcalino-terreux, caractérisé en ce que l'on effectue un mélange d'un sel de fer (II) ou (III) et d'un hypochlorite de métal alcalin ou alcalino-terreux, en poudre passant à une première maille, on forme une première couche de ce mélange en poudre dans un réceptacle plat couplé à un générateur de vibration mécanique, on dépose sur cette première couche une seconde couche formée de granules d'hydroxyde de métal alcalin ou alcalino-terreux contenant entre 10 et 30 % en poids d'eau, les granules étant refusées à une seconde maille nettement plus grande que la première, on soumet le réceptacle à une vibration pendant 10 à 60 minutes à moins de 40°C, en sorte que du ferrate se forme au contact des granules, on élimine les résidus en poudre par tamisage à une maille intermédiaire entre les première et seconde mailles, et on élimine l'excès d'hydroxyde par lavage avec un solvant organique sensiblement anhydre.

2. Procédé suivant la revendication 1, caractérisé en ce que, entre l'élimination des résidus en poudre et le lavage avec un solvant organique, on déshydrate les granules par étuvage à une température comprise entre 105° et 140°C, pendant 8 à 18 heures.

3. Procédé suivant la revendication 2, caractérisé en ce que l'on déshydrate les granules à environ 120°C pendant environ 12 heures.

4. Procédé suivant la revendication 1, caractérisé en ce que le sel de fer est un sulfate ferreux heptahydraté.

5. Procédé suivant la revendication 1, caractérisé en ce que l'hypochlorite de métal alcalin ou alcalino-terreux est un hypochlorite de calcium.

6. Procédé suivant la revendication 1, caractérisé en ce que l'hydroxyde de métal alcalin ou alcalino-terreux est de l'hydroxyde de potassium en pastilles, à 15 % en poids d'eau.

7. Procédé suivant la revendication 1, caractérisé en ce que la première maille est de 500 micromètres environ.

8. Procédé suivant la revendication 7, caractérisé en ce que le tamisage d'élimination des résidus en poudre est effectué avec une maille d'environ 1 mm.

9. Procédé suivant la revendication 1, caractérisé en ce que le solvant organique est un alcool inférieur, méthylique ou éthylique.

10. Procédé suivant la revendication 1, caractérisé en ce que les métaux alcalins ou alcalino-terreux sont compris dans le groupe comprenant sodium et potassium d'une part, et calcium et baryum d'autre part.

## Patentansprüche

1. Verfahren zur Herstellung von Alkali- oder Erdalkali-Ferraten durch Reaktion eines Hypochlorites mit einer höchstens dreiwertigen Eisenverbindung in Gegenwart von Alkali- oder Erdalkalihydroxiden, dadurch gekennzeichnet, daß man eine Mischung eines Eisen(II)- oder -(III)salzes und eines Alkali- oder Erdalkalihypochlorits in Pulverform durch ein erstes Sieb passieren läßt, man eine erste Schicht dieser Pulvermischung auf einer ebenen Unterlage bildet, die an einen mechanischen Vibrator gekoppelt ist, man über dieser ersten Schicht eine zweite Schicht ablagert, die aus Alkali- oder Erdalkali-Hydroxid-Körnchen mit 10 bis 30 Gew-% Wasser gebildet ist, wobei die Körnchen von einem zweiten Sieb, das deutlich größer als das erste ist, zurückgehalten werden, man die Unterlage einer Vibration während 10 bis 60 min bei höchstens 40°C unterwirft, so daß sich das Ferrat im Kontakt mit den Körnchen bildet, man die Rückstände des Pulvers durch Sieben durch ein Sieb mit einer Maschengröße zwischen dem ersten und dem zweiten Sieb entfernt und man überschüssiges Hydroxid durch Waschen mit einem praktisch wasserfreien organischen Lösungsmittel entfernt.

2. Verfahren gemäß Anspruch 1, dadurch gekennzeichnet, daß man zwischen dem Entfernen der Pulverrückstände und dem Waschen mit einem organischen Lösungsmittel die Körnchen durch Trocken bei einer Temperatur zwischen 105 und 140°C während 8 bis 18 h entwässert.

3. Verfahren gemäß Anspruch 2, dadurch gekennzeichnet, daß man die Körnchen bei annähernd 120°C während annähernd 12 h entwässert.

4. Verfahren gemäß Anspruch 1, dadurch gekennzeichnet, daß das Eisensalz ein Eisensulfatheptahydrat ist.

5. Verfahren gemäß Anspruch 1, dadurch gekennzeichnet, daß das Alkali- oder Erdalkalihypochlorit ein Calciumhypochlorit ist.

6. Verfahren gemäß Anspruch 1, dadurch gekennzeichnet, daß das Alkali- oder Erdalkali-Hydroxid ein Kaliumhydroxid in Plätzchenform mit 15 Gew-% Wasser ist.

7. Verfahren gemäß Anspruch 1, dadurch gekennzeichnet, daß das erste Sieb eine Maschengröße von ungefähr 500 µm hat.

8. Verfahren gemäß Anspruch 7, dadurch gekennzeichnet, daß das Aussieben der Pulverrückstände durch ein Sieb mit einer Maschenweite von ungefähr 1 mm bewerkstelligt wird.

9. Verfahren gemäß Anspruch 1, dadurch gekennzeichnet, daß das organische Lösungsmittel ein niederer Alkohol, Methyl- oder Ethylalkohol ist.

10. Verfahren gemäß Anspruch 1, dadurch gekennzeichnet, daß die Alkali- oder Erdalkalimetalle ausgewählt sind aus der Gruppe, die einerseits Natrium und Kalium und andererseits Calcium und Barium umfaßt.

## Claims

1. A process for the preparation of ferrates of alkali or alkaline-earth metals by the reaction of a hypochlorite on an iron compound which is at most trivalent in the presence of alkaline or alkaline-earth hydroxides, characterised by producing a mixture of an iron (II) or (III) salt and a hypochlorite of alkali or alkaline-earth metal, in the form of powder which passes a first mesh size, forming a first layer of said mixture in powder form in a flat receptacle coupled to a mechanical vibration generator, depositing on said first layer a second layer formed by granules of alkali or alkaline-earth metal hydroxide containing between 10 and 30% by weight of water, the granules being refused at a second mesh size which is markedly larger than the first mesh size, subjecting the receptacle to a vibration effect for a period of from 10 to 60 minutes at less than 40°C so that ferrate is formed in contact with the granules, eliminating the residues in powder form by sieving at a mesh size which is intermediate between the first and second mesh sizes, and eliminating the excess of hydroxide by washing with a substantially anhydrous organic solvent.

2. A process according to claim 1 characterised in that, between elimination of the residues in powder form and the washing operation using an organic solvent, the granules are dehydrated by drying in an oven at a temperature of between 105° and 140°C for a period of from 8 to 18 hours.

3.  A process according to claim 2 characterised by dehydrating the granules at about 120°C for a period of about 12 hours.

4.  A process according to claim 1 characterised in that the iron salt is a heptahydrated ferrous sulphate.

5.  A process according to claim 1 characterised in that the alkali or alkaline-earth metal hypochlorite is a calcium hypochlorite.

6.  A process according to claim 1 characterised in that the alkali or alkaline-earth metal hydroxide is potassium hydroxide in pellet form with 15% by weight of water.

7.  A process according to claim 1 characterised in that the first mesh size is about 500 micrometers.

8.  A process according to claim 7 characterised in that the sieving operation for elimination of the residues in powder form is effected with a mesh size of about 1 mm.

9.  A process according to claim 1 characterised in that the organic solvent is a lower methyl or ethyl alcohol.

10. A process according to claim 1 characterised in that the alkali or alkaline-earth metals are contained in the group comprising sodium and potassium on the one hand and calcium and barium on the other hand.